(19) Europäisches Patentamt
European Patent Office
Office européen des brevets

(11) EP 3 783 073 B1

(12) # EUROPEAN PATENT SPECIFICATION

(45) Date of publication and mention of the grant of the patent:
**03.08.2022 Bulletin 2022/31**

(21) Application number: **19788333.3**

(22) Date of filing: **15.04.2019**

(51) International Patent Classification (IPC):
***C09D 143/04*** *(2006.01)* ***C08F 220/10*** *(2006.01)*
***C09D 5/16*** *(2006.01)* ***C09D 7/63*** *(2018.01)*
***C09D 201/00*** *(2006.01)* ***C08F 230/08*** *(2006.01)*

(52) Cooperative Patent Classification (CPC):
(C-Sets available)
**C08F 230/08; C08F 220/10; C09D 5/16; C09D 7/63; C09D 143/04; C09D 201/00** (Cont.)

(86) International application number:
**PCT/JP2019/016124**

(87) International publication number:
**WO 2019/203181 (24.10.2019 Gazette 2019/43)**

(54) **ANTIFOULING COATING COMPOSITION**

BEWUCHSHEMMENDE BESCHICHTUNGSZUSAMMENSETZUNG

COMPOSITION DE REVÊTEMENT ANTISALISSURE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.04.2018 JP 2018081650**

(43) Date of publication of application:
**24.02.2021 Bulletin 2021/08**

(73) Proprietor: **Nitto Kasei Co., Ltd.**
**Osaka-shi**
**Osaka 533-0031 (JP)**

(72) Inventors:
- **WAKU, Hidenori**
  **Osaka-shi, Osaka 533-0031 (JP)**
- **MATSUKI, Takashi**
  **Osaka-shi, Osaka 533-0031 (JP)**
- **KOBAYASHI, Satoshi**
  **Osaka-shi, Osaka 533-0031 (JP)**
- **OKA, Nagato**
  **Osaka-shi, Osaka 533-0031 (JP)**
- **YASUI, Takuya**
  **Osaka-shi, Osaka 533-0031 (JP)**
- **ITO, Motomichi**
  **Osaka-shi, Osaka 533-0031 (JP)**

(74) Representative: **Gulde & Partner**
**Patent- und Rechtsanwaltskanzlei mbB**
**Wallstraße 58/59**
**10179 Berlin (DE)**

(56) References cited:
**EP-A1- 1 308 484**
**EP-A1- 2 161 316**
**EP-A1- 2 975 095**
**EP-A1- 2 990 450**
**WO-A1-03/072662**
**WO-A1-2010/071181**
**WO-A1-2015/012148**
**JP-A- H1 030 071**
**JP-A- H02 150 488**
**JP-A- 2000 167 993**
**JP-A- 2005 075 780**
**JP-A- 2005 507 450**
**US-A1- 2010 249 298**
**US-A1- 2018 094 092**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



(Cont. next page)

(52) Cooperative Patent Classification (CPC): (Cont.)

C-Sets
**C08F 230/08, C08F 220/14, C08F 220/281, C08F 220/1804, C08F 220/1804;**
**C08F 230/08, C08F 220/14, C08F 220/281, C08F 220/1804, C08F 220/281;**
**C08F 230/08, C08F 220/281, C08F 220/14, C08F 220/281, C08F 220/1802;**
**C08F 230/08, C08F 220/281, C08F 220/14, C08F 220/281, C08F 220/1804**

## Description

### Technical Field

The present invention relates to an antifouling coating composition.

### Background Art

Aquatic fouling organisms such as barnacles, tubeworms, common mussels, Bugula neritina, sea squirts, green laver, sea lettuce, and slimes adhere to ships (especially ship bottoms), fishing tools such as fishing nets and fishing net accessories, and structures submerged in seawater such as power plant aqueducts, leading to dysfunction, impaired appearance, and other problems of the ships and the like.

In order to prevent such problems, a technique which forms an antifouling coating film by coating an antifouling coating composition on a ship and the like, and allows controlled release of an antifouling agent to realize an antifouling performance for a long time has been known (Patent Literature 1). Further compositions are described in Patent Literatures 2 to 7.

### Citation List

### Patent Literature

[Patent Literature 1] JP 2000-17203 A
[Patent Literature 2] EP 2 990 450 A1
[Patent Literature 3] US 2010/249298 A1
[Patent Literature 4] EP 1 308 484 A1
[Patent Literature 5] EP 2 975 095 A1
[Patent Literature 6] US 2018/094092 A1
[Patent Literature 7] EP 2 161 316 A1

### Summary of Invention

### Technical Problem

However, even when the technique of Patent Literature 1 is used, there is a problem that the antifouling performance is not sufficiently realized in a draft section, which is waterline reached by water, while in a coating film section, which is constantly submerged in seawater, its antifouling performance is maintained for a long time. This is because the coating film in the draft section is subjected to repeated dry and wet and is more affected by various factors such as sunlight.

The present invention has been made by taking the afore-mentioned circumstances into consideration. The present invention provides a composition for forming an antifouling coating film which continues to dissolve for a long time even after being exposed to sunlight for a long time and realizes a good antifouling performance even in the draft section, where adhesion of aquatic fouling organisms is easy to occur, and high environmental safety.

### Solution to Problem

According to the present invention, an antifouling coating composition, comprising: a copolymer A; a carboxylic acid silyl ester B; a monocarboxylic acid metal salt C; wherein: the copolymer A is obtained by copolymerizing a mixture of a monomer (a), a monomer (b) and an ethylenically unsaturated monomer (c); the monomer (a) is represented by general formula (1); the monomer (b) is represented by general formula (2); the carboxylic acid silyl ester B is a silyl ester of a carboxylic acid other than an ethylenically unsaturated carboxylic acid and having triisopropylsilyl as a silyl group, is provided.

The present inventors have conducted intensive studies, and have found that when an antifouling coating film was formed using an antifouling coating composition containing a copolymer A, a carboxylic acid silyl ester B, and a monocarboxylic acid metal salt C, which have a specific structure, good antifouling performance can be realized even in the draft section, thereby completing the present invention.

## Description of Embodiments

Hereinafter, the present invention will be described in detail.

1. Antifouling coating composition

The antifouling coating composition of the present invention includes a copolymer A, a carboxylic acid silyl ester B, and a monocarboxylic acid metal salt C.

1-1. Copolymer A

The copolymer A is a copolymer containing triorganosilyl ester and can be obtained by copolymerizing a mixture of a monomer (a), a monomer (b), and an ethylenically unsaturated monomer (c). Therefore, the copolymer A contains monomeric unit derived from the monomers (a) to (c).

<Monomer (a)>

The monomer (a)is monomer containing a triorganosilyl group and has a structure represented by general formula (1).

[chemical formula 1]

$$X - \underset{R}{\overset{R}{\underset{|}{\overset{|}{Si}}}} - R \qquad (1)$$

In the general formula (1), three Rs are the same or different, and each of the Rs is a C3 to C8 hydrocarbon group branched at $\alpha$-position or $\beta$-position, and the hydrocarbon group is an aliphatic or aromatic group and has a linear, branched, or cyclic structure, and X represents an acryloyloxy group, a methacryloyloxy group, a maleinoyloxy group, a fumaroyloxy group or an itaconoyloxy group.

Examples of the C3 to C8 hydrocarbon group branched at $\alpha$-position include isopropyl group, s-butyl group, t-butyl group, 1-ethylpropyl group, 1-methylbutyl group, 1-methylpentyl group, 1, 1-dimethylpropyl group, 1,1-dimethylbutyl group, texyl group, cyclohexyl group, 1,1-dimethylpentyl group, 1-methylhexyl group, 1,1-dimethylhexyl group, 1-methylheptyl group. Examples of the C3 to C8 hydrocarbon group branched at $\beta$-position include 2,2-dimethylpropyl group, cyclohexylmethyl group, 2-ethylhexyl group, and 2-propylpentyl group.

By selecting a specific group as R, defects in the coating film are further unlikely to occur, and the water resistance of the antifouling coating film is particularly improved. From this point of view, Rs are the same or different, and each of the Rs is preferably isopropyl group, s-butyl group, t-butyl group, phenyl group, and 2-ethylhexyl group, and more preferably isopropyl group.

Examples of the monomer (a) include triisopropylsilyl (meth)acrylate, tri-s-butylsilyl (meth)acrylate, triphenylsilyl (meth)acrylate, diisopropyl s-butylsilyl (meth)acrylate, diisopropyl t-butylsilyl (meth)acrylate, diisopropylthexylsilyl (meth)acrylate, diisopropylphenylsilyl (meth)acrylate, isopropyl di-s-butylsilyl (meth)acrylate, isopropyldiphenylsilyl (meth)acrylate, diphenylthexylsilyl (meth)acrylate, t-butyldiphenylsilyl (meth)acrylate, diisopropylcyclohexylsilane (meth)acrylate, tricyclohexylsilane (meth)acrylate, tri-1,1-dimethylpentylsilane (meth)acrylate, tri-1-methylhexylsilane (meth)acrylate, tri-1,1-dimethylhexylsilane (meth)acrylate, tri-1-methylheptylsilane (meth)acrylate, tri-2,2-dimethylpropylsilane (meth)acrylate, tricyclohexylmethylsilane (meth)acrylate, diisopropylcyclohexylmethylsilane (meth)acrylate, tri-2-ethylhexylsilane (meth)acrylate, tri-2-propylpentylsilane (meth)acrylate. In particular, from the viewpoint of preventing defects of the coating film and forming an antifouling coating film having excellent water resistance, triisopropylsilyl (meth)acrylate, tri-s-butylsilyl (meth)acrylate, t-butyldiphenylsilyl (meth)acrylate and tri-2-ethylhexylsilyl (meth)acrylate are preferable, and triisopropylsilyl (meth)acrylate is more preferable. These triorganosilyl (meth)acrylate ester monomers can be used alone, or two or more of these can be used in combination.

<Monomer (b) containing an oxygen atom>

The monomer (b) is a monomer containing an oxygen atom and has a structure represented by general formula (2).

$$Y\text{-}R \quad (2)$$

In the general formula (2), R represents a C2 to C10 alkyl group having an oxygen atom or a C2 to C10 aryl group having an oxygen atom, and Y represents an acryloyloxy group, a methacryloyloxy group, a maleinoyloxy group, a fumaroyloxy group or an itaconoyloxy group.

The monomer (b) is a monomer copolymerizable with the monomer (a) and an ethylenically unsaturated monomer containing an oxygen atom. Examples of the monomer (b) include, 2-methoxyethyl (meth)acrylate, 2-methoxypropyl (meth)acrylate, 4-methoxybutyl (meth)acrylate, 2-ethoxyethyl (meth)acrylate, diethylene glycol monomethyl (meth)acrylate, propylene glycol monomethyl (meth)acrylate, 2-hydroxyethyl (meth)acrylate , 2-hydroxypropyl (meth)acrylate, glycidyl (meth)acrylate, furfuryl (meth)acrylate, tetrahydrofurfuryl (meth)acrylate, and the like, and from the viewpoint of the physical properties of the coating film, 2-methoxyethyl (meth)acrylate is more preferable. The monomer (b) exemplified above can be used alone or two or more of these can be used in combination as a monomer component of the copolymer A.

<Ethylenically unsaturated monomer (c)>

The monomer (c) is a monomer other than the monomer (a) and the monomer (b) and is an ethylenically unsaturated monomer copolymerizable with the monomer (a) and the monomer (b). Examples of the monomer (c) include (meth)acrylate esters such as methyl (meth)acrylate, ethyl (meth)acrylate, n-butyl (meth)acrylate, i-butyl (meth)acrylate, t-butyl (meth)acrylate, 2-ethylhexyl (meth)acrylate, lauryl (meth)acrylate, dimethylaminoethyl (meth)acrylate, diethylaminoethyl (meth)acrylate, benzyl (meth)acrylate, phenyl (meth)acrylate, zinc (meth)acrylate, copper (meth)acrylate, zinc (meth)acrylate versatate, copper (meth)acrylate versatate, zinc (meth)acrylate naphthenate, copper (meth)acrylate naphthenate, zinc (meth)acrylate stearate, copper (meth)acrylate abietic acid; vinyl compounds such as vinyl chloride, vinylidene chloride, (meth)acrylonitrile, vinyl acetate, butyl vinyl ether, lauryl vinyl ether, N-vinyl pyrrolidone; aromatic compounds such as styrene, vinyltoluene, and $\alpha$-methylstyrene.

Among these, (meth)acrylate esters are particularly preferable, and methyl (meth)acrylate, ethyl (meth)acrylate, n-butyl (meth)acrylate, i-butyl (meth)acrylate, and 2-ethylhexyl (meth)acrylate, zinc (meth)acrylate, zinc (meth)acrylate naphthenate, copper (meth)acrylate abietic acid, (meth)acrylate hydrogenated rosin zinc, and (meth)acrylate hydrogenated rosin copper are more preferable. The monomer (c) exemplified above can be used alone or two or more of these can be used in combination as a monomer component of the copolymer A.

<Synthesis of copolymer A>

The copolymer A is obtained by copolymerizing a mixture of the monomer (a), the monomer (b), and the monomer (c). The content of the monomer (a) in the mixture is preferably about 20 to 70mass%, more preferably about 30 to 60mass%. When the content of the monomer (a) is about 30 to 60mass%, the coating film formed by using the obtained antifouling coating composition can stably dissolve and maintain the antifouling performance for a long time. The content of the monomer (a) in the mixture is specifically, for example, 20, 30, 40, 50, 60, 70mass%, and may be in the range between the two values exemplified herein.

The weight average molecular weight (Mw) of the copolymer A is preferably 10,000 to 100,000, particularly preferably 20,000 to 70,000. When Mw is 10,000 to 100,000, the coating film does not become fragile and the coating film dissolves moderately so that the desired antifouling effect can be effectively exhibited. Examples of the method for measuring Mw include gel permeation chromatography (GPC). This weight average molecular weight is, for example, 10,000, 20,000, 30,000, 40,000, 50,000, 60,000, 70,000, 80,000, 90,000, 100,000, and may be in the range between the two values exemplified herein.

The copolymer A may be a random copolymer, an alternating copolymer, a periodic copolymer, or a block copolymer of the monomer (a), the monomer (b), and the monomer (c). The copolymer A can be obtained, for example, by polymerizing the monomer (a), the monomer (b), and the monomer (c) in the presence of a polymerization initiator.

Examples of the polymerization initiator used in the above polymerization reaction include azo compounds such as 2,2'-azobisisobutyronitrile (AIBN), 2,2'-azobis(2-methylbutyronitrile), and dimethyl-2,2'-azobisisobutylate; and peroxides such as benzoyl peroxide, di-tert-butylperoxide, tert-butyl peroxybenzoate, tert-butylperoxyisopropyl carbonate, tert-butylperoxy-2-ethylhexanoate, and 1,1,3,3-tetramethylbutylperoxy-2-ethylhexanoate, and 1,1,3,3-tetramethylbutylperoxy neodecanoate. These polymerization initiators can be used alone, or two or more of these can be used in combination. As the polymerization initiator, AIBN, tert-butylperoxy-2-ethylhexanoate, 1,1,3,3-tetramethylbutylperoxy-2-ethylhexanoate or 1,1,3,3-tetramethylbutylperoxyneodecanoate are preferable. By suitably controlling the amount of

the polymerization initiator being used, the molecular weight of the copolymer A can be adjusted. At this time, a chain transfer agent such as mercaptan or α-methylstyrene dimer can also be used.

As the method of polymerization, solution polymerization, bulk polymerization, emulsion polymerization, suspension polymerization and the like can be mentioned. Among these, in view of the capability of obtaining the copolymer A simply with accuracy, solution polymerization is preferable.

In the polymerization reaction, an organic solvent may be used if necessary. Examples of the organic solvent include aromatic hydrocarbon solvents such as xylene and toluene; aliphatic hydrocarbon solvents such as hexane and heptane; ester solvents such as ethyl acetate, butyl acetate, isobutyl acetate, and methoxypropyl acetate; alcohol solvents such as isopropyl alcohol, butyl alcohol, and propylene glycol monomethyl ether; ether solvents such as dioxane, diethyl ether and dibutyl ether; ketone solvents such as methyl ethyl ketone and methyl isobutyl ketone. Among these, ester solvents, alcohol solvents, and aromatic hydrocarbon solvents are particularly preferable, and butyl acetate, isobutyl acetate, butyl alcohol, propylene glycol monomethyl ether, toluene, and xylene are more preferable. These solvents can be used alone, or two or more of these can be used in combination.

The reaction temperature in the polymerization reaction may be suitably controlled depending on the type of the polymerization initiator used and the like. The reaction temperature is usually 70 to 140°C, preferably 80 to 120°C. The reaction time in the polymerization reaction may be suitably controlled depending on the reaction temperature and the like and is usually approximately 4 to 8 hours. The polymerization reaction is preferably performed under inert gas atmosphere such as nitrogen gas or argon gas.

The content of a copolymer A in the composition of the present invention is not particularly limited, but is usually 2 to 50mass%, preferably 4 to 25mass% in the solid content of the composition of the present invention. When the content of a copolymer A is 4 to 25 mass%, a moderate dissolution rate of the coating film in seawater and physical properties of the coating film can be obtained, and the surface can keep renewed stably for a long time, and a desired antifouling performance can be effectively realized. Further, an excellent recoating performance of the coating film can be realized.

1-2. Carboxylic acid silyl ester B

The carboxylic acid silyl ester B is a triisopropylsilyl ester of a carboxylic acid other than an ethylenically unsaturated carboxylic acid, and examples of the carboxylic acid include saturated fatty acids such as acetic acid, propionic acid, butyric acid, valeric acid, hexanoic acid, neohexanoic acid, versatic acid, octanoic acid, 2-ethylhexanoic acid, nonanoic acid, neononanoic acid, decanoic acid, neodecanoic acid, lauric acid, stearic acid, and naphthenic acid; hydroxy acids such as lactic acid, malic acid, citric acid; aromatic carboxylic acids such as benzoic acid, phthalic acid and salicylic acid; resin acids such as rosin, hydrogenated rosin and disproportionated rosin; and cycloalkenyl carboxylic acids such as trimethylisobutenylcyclohexene carboxylic acid.

From the viewpoint of excellent antifouling performance in the draft section and good coating properties such as crack resistance, saturated fatty acids such as neodecanoic acid, lauric acid, stearic acid, and naphthenic acid; resin acids such as rosin, hydrogenated rosin, disproportionated rosin; and cycloalkenyl carboxylic acids such as trimethylisobutenylcyclohexene carboxylic acid are preferable, naphthenic acid, rosin, hydrogenated rosin, disproportionated rosin and trimethylisobutenylcyclohexene carboxylic acid are more preferable.

The content of the carboxylic acid silyl ester B in the composition of the present invention is not particularly limited, but the content ratio of the carboxylic acid silyl ester B to the copolymer A by mass ratio (the carboxylic acid silyl ester B/the copolymer A) is usually 0.1 to 25mass% and more preferably 0.1 to 15mass% in terms of solid content. When the content ratio is within the above range, the crack resistance and the film dissolution of the coating film of the coating composition of the present invention are improved, and the effect is particularly remarkable in the draft section.

1-3. Monocarboxylic acid metal salt C

Examples of the monocarboxylic acid of the monocarboxylic acid metal salt include saturated fatty acids such as acetic acid, propionic acid, butyric acid, valeric acid, hexanoic acid, neohexanoic acid, versatic acid, octanoic acid, 2-ethylhexanoic acid, nonanoic acid, neononanoic acid, decane acid, neodecanoic acid, lauric acid, stearic acid, and naphthenic acid; hydroxy acids such as lactic acid, malic acid, citric acid; aromatic carboxylic acids such as benzoic acid, phthalic acid, and salicylic acid; resin acids such as rosin, hydrogenated rosin, disproportionated rosin; cycloalkenyl carboxylic acids such as trimethylisobutenylcyclohexene carboxylic acid. From the viewpoint of an excellent antifouling performance in the draft section and good coating properties such as crack resistance, saturated fatty acids such as neodecanoic acid, lauric acid, stearic acid, naphthenic acid; resin acids such as rosin, hydrogenated rosin, disproportionated rosin; cycloalkenylcarboxylic acids such as trimethylisobutenylcyclohexene carboxylic acid are preferable, and naphthenic acid, rosin, hydrogenated rosin, disproportionated rosin and trimethylisobutenylcyclohexene carboxylic acid are more preferable.

Examples of the metal of the monocarboxylic acid metal salt include zinc, magnesium, copper and the like, and zinc and copper are particularly preferable.

The content of the monocarboxylic acid metal salt C in the composition of the present invention is not particularly limited, but the content ratio of the copolymer A to the monocarboxylic acid metal salt C (the copolymer A/the monocarboxylic acid metal salt C) is usually 15 to 0.1, preferably 10 to 0.3, and more preferably 5 to 0.6 by mass ratio in terms of solid content. When the content ratio is within the above range, the crack resistance and the film dissolution of the coating film of the coating composition of the present invention are improved, and the effect is particularly remarkable in the draft section.

1-4. Antifouling agent

As the antifouling agent, for example, an inorganic chemical and an organic chemical can be mentioned.

As the inorganic chemical, for example, cuprous oxide, cuprous thiocyanate (generic name: rhodan copper), copper powder, and the like can be mentioned. Among these, cuprous oxide and rhodan copper are particularly preferable. From the viewpoint of long-term shelf stability, the cuprous oxide surface-treated with glycerin, sucrose, stearate, laurate, lecithin, mineral oil, and the like is more preferable.

As the organic chemical, for example, copper 2-mercaptopyridine-N-oxide (generic name: copper pyrithione), zinc 2-mercaptopyridine-N-oxide (generic name: zinc pyrithione), zinc ethylenebis(dithiocarbamate) (generic name: zineb), 4,5-dichloro-2-n-octyl-3-isothiazolone (generic name: Sea-nine 211), 3,4-dichlorophenyl-N-N-dimethylurea (generic name: Diuron), 2-methylthio-4-t-butylamino-6-cyclopropylamino-s-triazine (generic name: Irgarol 1051), 2-(p-chlorophenyl)-3-cyano-4-bromo-5-trifluoromethyl pyrrole (generic name: ECONEA 28), 4-[1-(2,3-dimethylphenyl)ethyl]-1H-imidazole (generic name: Medetomidine) can be mentioned.

These antifouling agents can be used alone, or two or more of these can be used in combination.

1-5. Other additives

Further, if necessary, the resin for antifouling coating of the present invention is added with an elution regulator, a plasticizer, a pigment, a dye, an antifoaming agent, a dehydrating agent, a thixotropic agent, an organic solvent, and the like to obtain the antifouling coating.

As the elution regulator, alicyclic hydrocarbon resins can be exemplified, and Quintone 1500, Quintone 1525L, and Quintone 1700 (product name, available from Zeon Corporation) and the like can be mentioned as commercially available products for example.

As the plasticizer, for example, phosphoric acid esters, phthalic acid esters, adipic acid esters, sebacic acid esters, epoxidized soybean oil, alkyl vinyl ether polymer, polyalkylene glycols, t-nonyl pentasulfide, vaseline, polybutene, tris(2-ethylhexyl) trimellitate, silicone oil, liquid paraffin, chlorinated paraffin and the like can be mentioned. These can be used alone, or two or more of these can be used in combination.

As the dehydrating agent include, for example, synthetic zeolite adsorbents, orthoesters, silicates such as tetramethoxysilane and tetraethoxysilane, isocyanates, carbodiimides, carbodiimidazoles, and the like can be mentioned. These can be used alone, or two or more of these can be used in combination.

2. Manufacturing method of antifouling coating composition

The antifouling coating composition of the present invention can be manufactured, for example, by mixing and dispersing a mixture solution including the copolymer A, the carboxylic acid silyl ester B, the monocarboxylic acid metal salt C, and other additives using a disperser.

Regarding the mixture solution, the ingredients such as the copolymers, the antifouling agent, and the like are preferably dissolved or dispersed in the solvent.

As the disperser, for example, the one which can be used as a micro-pulverizer can be suitably used. For example, a commercially available homo mixer, sand mill, bead mill, and the like can be used. Furthermore, the mixed solution can be mixed and dispersed by using a stirrer-equipped container containing glass beads for mixing and dispersing.

3. Method for antifouling treatment, antifouling coating film, and coated object

The method for antifouling treatment of the present invention is characterized in that an antifouling coating film is formed using the above-explained antifouling coating composition on the surface of an object that is subjected to coating. The method for antifouling treatment of the present invention can prevent adhesion of aquatic fouling organisms by the gradual dissolution of the surface of the antifouling coating film such that the surface of the coating film is continually

renewed.

Examples of objects on which the coating film can be formed include ships (in particular, ship bottoms), fishing tools, structures submerged in seawater, and the like.

The thickness of the antifouling coating film can be suitably selected depending on the type of the object on which the coating film is to be formed, the navigation speed of a ship, the seawater temperature, and the like. For example, when the object on which a coating film is formed is a ship bottom, the thickness of the antifouling coating film is usually 50 to 700 μm, and preferably 100 to 600 μm.

## EXAMPLES

Examples and the like are provided hereinafter, and further clarifies characteristics of the present invention. The present invention, however, is not limited to these Examples.

In each of Production Examples, Comparative Production Examples, Examples, and Comparative Examples, "%" denotes "% by mass". The viscosity was measured at 25°C using a Brookfield viscometer. The weight average molecular weight (Mw) was determined by gel permeation chromatography (GPC) (using a polystyrene standard). GPC was performed under the following conditions.

Equipment: HLC-8220 GPC (available from Tosoh Corporation)
Column: TSK-gel Super HZM-M, two columns used
Flow rate: 0.35 mL/min
Detector: RI
Column thermostat temperature: 40°C
Developing solvent: THF
The non-volatile content is a value determined in accordance with JIS K 5601-1-2:1999 (ISO 3251:1993) "Testing methods for paint components- Determination of non-volatile matter content".

The formulation among of each component shown in Table 1 is represented in grams.

<Production Example 1 (Production of copolymer solution 1-1 containing triisopropylsilylmethacrylate)>

After 230 g of xylene was charged into a 1000 mL flask equipped with a thermometer, a reflux condenser, a stirrer and a dropping funnel, a mixed solution of 270 g of triisopropylsilyl methacrylate, 130 g of 2-methoxyethyl methacrylate, 30 g of 2-methoxyethyl acrylate, 50 g of methyl methacrylate, 20 g of ethyl acrylate, and 4 g of t-butylperoxy-2-ethylhexanoate (initial addition) was added dropwise over 1 hour, while stirring at 100±2°C under nitrogen atmosphere. After dropping, the polymerization reaction was carried out at 100±2°C for 2 hours. Then, while stirring the reaction solution at 100±2°C, 1 g of t-butylperoxy-2-ethylhexanoate (post addition) was added 3 times every 2 hours to carry out the polymerization reaction. Then, 270 g of xylene was added and dissolved to obtain copolymer solution 1-1 containing triisopropylsilylmethacrylate. The viscosity, non-volatile content, Mw and Tg of 1-1 are shown in Table 1.

<Production Examples 2 to 6 (production of copolymer solutions 1-2, 2-1, 2-2, 3-1, and 3-2)>

The organic solvents, monomer, and polymerization initiator shown in Table 1 were used, and polymerization was performed by processes similar to those of Production Example 1, thereby obtaining copolymer solutions 1-2, 2-1, 2-2, 3-1 and 3-2. The viscosity, non-volatile content and Mw of each copolymer solution obtained were shown in Table 1.

[Table 1]

Table 1

| kind of component | component | Production Example | | | | | |
|---|---|---|---|---|---|---|---|
| | | 1 | 2 | 3 4 | | 5 | 6 |
| xylene | | 230 | 230 | 230 | 230 | 450 | 450 |

(continued)

| kind of component | component | Production Example | | | | | |
|---|---|---|---|---|---|---|---|
| | | 1 | 2 | 3 4 | | 5 | 6 |
| monomer (a) | triisopropylsilyl methacrylate | 270 | 300 | | | | |
| | triisopropylsilyl acrylate | | | 270 | 300 | | |
| monomer (b) | 2-methoxyethyl methacrylate | 130 100 | | 50 | | | |
| | 2-methoxyethyl acrylate | 30 | 30 | 30 | 30 | 120 | |
| monomer (c) | methyl methacrylate | 50 | 50 | 130 | 130 | | 140 |
| | ethyl acrylate | 20 | | | | | |
| | n-butyl methacrylate | | 20 | | 20 | | |
| | n-butyl acrylate | | | 20 | 20 | 180 | 360 |
| | i-butyl methacrylate | | | | | 200 | |
| sum of monomers (g) | | 500 | 500 | 500 | 500 | 500 | 500 |
| polymerization initiator | initial addition | 4 | 4 | 4 | 4 | 14 | 4 |
| | post addition 3 times | 1 | 1 | 1 | 1 | 1 | 1 |
| amount of xylene added after completing the reaction | | 270 | 270 | 270 | 270 | 50 | 50 |
| reaction temperature (°C)(within ±2°C) | | 100 | 100 | 100 | 100 | 100 | 100 |
| physical properties of copolymer | viscosity (mPa·s/25°C) | 310 | 280 | 290 | 250 | 80 | 70 |
| | non-volatile content (%/110°C, 3 h) | 50.1 | 49.5 | 50.0 | 49.6 | 50.1 | 49.9 |
| | weight average molecular weight (Mw) | 46,000 | 42,000 | 47,000 | 45,000 | 25,000 | 24,000 |
| | glass transition temperature (°C/Tg) | 47 | 48 | 35 | 36 | -21 | -25 |
| | copolymer solution | 1-1 | 1-2 | 2-1 | 2-2 | 3-1 | 3-2 |

<Production Example 7 (production of triisopropylsilyl rosinate solution)>

To a 500 ml flask equipped with a thermometer, a reflux condenser, a stirrer, and dropping funnel, 260 g of gum rosin/xylene solution (solid content 50%) and 42 g of triethylamine were charged and then stirred under nitrogen atmosphere and kept at 45 to 55°C, and 78 g of triisopropyl chloride was added dropwise to the flask. After dropping, the resulting reaction solution was aged for 5 hours while keeping at 45 to 55°C. Then, 100 g of water was added to the flask to quench. The obtained organic layer was refluxed and dehydrated, and xylene was added to obtain a triisopropylsilyl rosinate solution (solid content 50%), respectively.

<Production Examples 8 to 9 (production of triisopropylsilyl hydrogenated rosinate solution and triisopropylsilylnaphtheneate solution)>

A hydrogenated rosin/xylene solution (solid content: 50%) and a naphthenic acid/xylene solution (solid content 50%) were reacted by processes similar to those of Production Example 7 to obtain a triisopropylsilyl hydrogenated rosinate solution (solid content: 50%) and a triisopropylsilyl naphthenate solution (solid content 50%).

<Production Example 10 (production of triisopropylsilyl trimethylisobutenylcyclohexene carboxylate solution)>

To a 500 mL flask equipped with a thermometer, a reflux condenser, and a stirrer, 320 g of aloocimene, 175 g of methacrylic acid and 0.17 g of MEHQ were charged and heated and stirred at 40°C for 24 hours. Then, the unreacted raw materials were distilled off under reduced pressure to obtain 73 g of a brown viscous liquid trimethylisobutenylcyclohexene carboxylic acid. This was added with xylene to obtain trimethylisobutenylcyclohexene carboxylic acid (solid content 50%).

Next, using trimethylisobutenylcyclohexene carboxylic acid (solid content 50%), a reaction was carried out by processes similar to those of Production Example 7, and a triisopropylsilyl trimethylisobutenylcyclohexene carboxylate solution (solid content 50%) was obtained.

<Production Example 11 (production of rosin zinc salt solution)>

To a 1000 ml flask equipped with a thermometer, a reflux condenser, and a stirrer, 400 g of gum rosin/xylene solution (solid content 50%), 100 g of zinc oxide ZnO and 50 g of xylene were added. The mixture was refluxed and dehydrated under reduced pressure at 70 to 80°C for 3 hours, and then cooled to room temperature (25°C) and filtered to obtain a rosin zinc salt solution (dark brown transparent solution, solid content 50%).

<Production Examples 12 to 14 (production of hydrogenated rosin zinc salt solution, naphthenic acid zinc salt solution and trimethylisobutenylcyclohexene carboxylic acid zinc salt solution)>

Using a hydrogenated rosin/xylene solution (solid content 50%), a naphthenic acid/xylene solution (solid content 50%) and trimethylisobutenylcyclohexene carboxylic acid (solid content 50%), each of reaction was carried out by processes similar to those of Production Example 11 to obtain a hydrogenated rosin zinc salt solution (solid content 50%), a naphthenic acid zinc salt solution (solid content 50%) and a trimethylisobutenylcyclohexene carboxylic acid zinc salt solution (solid content 50%).

<Examples 1 to 19 and Comparative Examples 1 to 7 (production of coating composition)>

The copolymer solutions 1-1 to 2-2, obtained in Production Examples 1 to 4 were used as the copolymer A. The copolymer solutions 3-1 to 3-2 as obtained in Production Examples 5 and 6 were used as other copolymer. Further, the xylene solutions obtained in Production Examples 7 to 10 (solid content about 50%) as the carboxylic acid silyl ester B, the xylene solutions obtained in Production Examples 11 to 14 (solid content about 50%) as the monocarboxylic acid metal salt C, and the plasticizers, antifouling agents, other additives, and solvents described in Tables 2 to 4 were used, and the coating compositions were prepared by formulating by the ratio (by mass%) shown in Table 2 and mixing and dispersing them with a small experimental tabletop sand mill (using glass beads having a diameter of 1.5 mm to 2.5 mm).

[Table 2]

Table 2

| component | | Example | | | | | | | |
|---|---|---|---|---|---|---|---|---|---|
| | | 1 | 2 | 3 | 4 | 5 | 6 | 7 | 8 |
| copolymer A | copolymer solution 1-1 containinq silyl methacrylate | 13.0 | | | | 13.0 | | 13.0 | |
| | copolymer solution 1-2 containinq silyl methacrylate | | 13.0 | | | | | | |
| | copolymer solution 2-1 containing silyl acrylate | | | 13.0 | | | 13.0 | | 13.0 |
| | copolymer solution 2-2 containinq silyl acrylate | | | | 13.0 | | | | |
| carboxylic acid silyl ester B | triisopropylsilyl rosinate solution | 0.5 | 0.5 | 0.5 | 0.5 | | | | |
| | triisopropylsilyl hydrogenated rosinate solution | 0.5 | 0.5 | 0.5 | 0.5 | | | | |
| | triisopropylsilyl naphthenate solution | | | | | 1.0 | 1.0 | | |
| | triisopropylsilyl trimethylisobutenylcyclohexene carboxylate solution | | | | | | | 1.0 | 1.0 |
| monocarboxylic acid metal salt C | rosin zinc salt solution | 6.5 | 6.5 | 6.5 | 6.5 | | | | |
| | hydrogenated rosin zinc salt solution | 6.5 | 6.5 | 6.5 | 6.5 | | | | |
| | naphthenic acid zinc salt solution | | | | | 13.0 | 13.0 | | |
| | trimethylisobutenylcyclohexene carboxylic acid zinc salt solution | | | | | | | 13.0 | 13.0 |
| plasticizer | chlorinated paraffin | 2.0 | 2.0 | 2.0 | 2.0 | 2.0 | 2.0 | 2.0 | 2.0 |
| | E-2000H | 1.0 | 1.0 | 1.0 | 1.0 | 1.0 | 1.0 | 1.0 | 1.0 |
| antifouling agent | cuprous oxide | 43.0 | 43.0 | 43.0 | 43.0 | 43.0 | 43.0 | 43.0 | 43.0 |
| | copper pyrithione | 2.0 | 2.0 | 2.0 | 2.0 | 2.0 | 2.0 | 2.0 | 2.0 |
| other additives | talc | 7.0 | 7.0 | 7.0 | 7.0 | 7.0 | 7.0 | 7.0 | 7.0 |
| | zinc oxide | 6.0 | 6.0 | 6.0 | 6.0 | 6.0 | 6.0 | 6.0 | 6.0 |
| | red oxide | 3.0 | 3.0 | 3.0 | 3.0 | 3.0 | 3.0 | 3.0 | 3.0 |
| | titanium oxide | 1.0 | 1.0 | 1.0 | 1.0 | 1.0 | 1.0 | 1.0 | 1.0 |
| | tetraethoxysilane | 1.0 | 1.0 | 1.0 | 1.0 | 1.0 | 1.0 | 1.0 | 1.0 |
| | fatty acid amide thixotropic aqent | 1.0 | 1.0 | 1.0 | 1.0 | 1.0 | 1.0 | 1.0 | 1.0 |
| solvent | xylene | 6.0 | 6.0 | 6.0 | 6.0 | 6.0 | 6.0 | 6.0 | 6.0 |

(continued)

| component | | Example | | | | | | | |
|---|---|---|---|---|---|---|---|---|---|
| | | 1 | 2 | 3 | 4 | 5 | 6 | 7 | 8 |
| sum | | 100.0 | 100.0 | 100.0 | 100.0 | 100.0 | 100.0 | 100.0 | 100.0 |
| antifouling test | 12 months | ◎ | ◎ | ◎ | ◎ | ◎ | ◎ | ◎ | ◎ |
| | 18 months | ◎ | ◎ | ◎ | ◎ | ◎ | ◎ | ◎ | ◎ |
| | 24 months | ◎ | ◎ | ◎ | ◎ | ◎ | ◎ | ○ | ○ |

[Table 3]

Table 3-1

| component | | Example | | | | | |
|---|---|---|---|---|---|---|---|
| | | 9 | 10 | 11 | 12 | 13 | 14 |
| copolymer A | copolymer solution 1-1 containing silyl methacrylate | 10.0 | | 10.0 | | 10.0 | |
| | copolymer solution 1-2 containing silyl methacrylate | | | | | | |
| | copolymer solution 2-1 containinq silyl acrylate | | 10.0 | | 10.0 | | 10.0 |
| | copolymer solution 2-2 containinq silyl acrylate | | | | | | |
| other copolymer | copolymer solution 3-1 | 3.0 | 3.0 | 3.0 | 3.0 | 3.0 | 3.0 |
| | copolymer solution 3-2 | | | | | | |
| carboxylic acid silyl ester B | triisopropylsilyl rosinate solution | 0.5 | 0.5 | | | | |
| | triisopropylsilyl hydrogenated rosinate solution | 0.5 | 0.5 | | | | |
| | triisopropylsilyl naphthenate solution | | | 1.0 | 1.0 | | |
| | triisopropylsilyl trimethylisobutenylcyclohexene carboxylate solution | | | | | 1.0 | 1.0 |
| monocarboxylic acid metal salt C | rosin zinc salt solution | 6.5 | 6.5 | | | | |
| | hydrogenated rosin zinc salt solution | 6.5 | 6.5 | | | | |
| | naphthenic acid zinc salt solution | | | 13.0 | 13.0 | | |
| | trimethyliso butenylcyclohexene carboxylic acid zinc salt solution | | | | | 13.0 | 13.0 |
| plasticizer | chlorinated paraffin | 2.0 | 2.0 | 2.0 | 2.0 | 2.0 | 2.0 |
| | E-2000H | 1.0 | 1.0 | 1.0 | 1.0 | 1.0 | 1.0 |
| antifouling agent | cuprous oxide | 40.0 | 40.0 | 40.0 | 40.0 | 40.0 | 40.0 |
| | copper pyrithione | 2.0 | 2.0 | 2.0 | 2.0 | 2.0 | 2.0 |
| | SeaNine | 3.0 | 3.0 | 3.0 | 3.0 | 3.0 | 3.0 |
| | medetomidine | | | | | | |
| | Econia | | | | | | |
| other additives | talc | 7.0 | 7.0 | 7.0 | 7.0 | 7.0 | 7.0 |
| | zinc oxide | 6.0 | 6.0 | 6.0 | 6.0 | 6.0 | 6.0 |
| | red oxide | 3.0 | 3.0 | 3.0 | 3.0 | 3.0 | 3.0 |
| | titanium oxide | 1.0 | 1.0 | 1.0 | 1.0 | 1.0 | 1.0 |
| | tetraethoxysilane | 1.0 | 1.0 | 1.0 | 1.0 | 1.0 | 1.0 |
| | fatty acid amide thixotropic agent | 1.0 | 1.0 | 1.0 | 1.0 | 1.0 | 1.0 |
| solvent | xylene | 6.0 | 6.0 | 6.0 | 6.0 | 6.0 | 6.0 |
| sum | | 100.0 | 100.0 | 100.0 | 100.0 | 100.0 | 100.0 |

(continued)

| component | | Example | | | | | |
|---|---|---|---|---|---|---|---|
| | | 9 | 10 | 11 | 12 | 13 | 14 |
| antifouling test | 12 months | ◎ | ◎ | ◎ | ◎ | ◎ | ◎ |
| | 18 months | ◎ | ◎ | ◎ | ◎ | ◎ | ◎ |
| | 24 months | ◎ | ◎ | ◎ | ◎ | ◎ | ◎ |

Table 3-2

| component | | Example | | | | |
|---|---|---|---|---|---|---|
| | | 15 | 16 | 17 | 18 | 19 |
| copolymer A | copolymer solution 1-1 containinq silyl methacrylate | 10.0 | | 10.0 | | 12.6 |
| | copolymer solution 1-2 containinq silyl methacrylate | | | | | |
| | copolymer solution 2-1 containinq silyl acrylate | | 10.0 | | 10.0 | |
| | copolymer solution 2-2 containinq silyl acrylate | | | | | |
| other copolymer | copolymer solution 3-1 | 3.0 | 3.0 | 3.0 | 3.0 | |
| | copolymer solution 3-2 | | | | | |
| carboxylic acid silyl ester B | triisopropylsilyl rosinate solution | 0.5 | 0.5 | 0.5 | 0.5 | 2.0 |
| | triisopropylsilyl hydrogenated rosinate solution | 0.5 | 0.5 | 0.5 | 0.5 | 2.0 |
| | triisopropylsilyl naphthenate solution | | | | | |
| | triisopropylsilyl trimethylisobutenylcyclohexene carboxylate solution | | | | | |
| monocarboxylic acid metal salt C | rosin zinc salt solution | 6.5 | 6.5 | 6.5 | 6.5 | 6.3 |
| | hydrogenated rosin zinc salt solution | 6.5 | 6.5 | 6.5 | 6.5 | 6.3 |
| | naphthenic acid zinc salt solution | | | | | |
| | trimethylisobutenylcyclohexene carboxylic acid zinc salt solution | | | | | |
| plasticizer | chlorinated paraffin | 2.0 | 2.0 | 2.0 | 2.0 | 1.9 |
| | E-2000H | 1.0 | 1.0 | 1.0 | 1.0 | 1.0 |
| antifouling agent | cuprous oxide | 43.0 | 43.0 | 41.0 | 41.0 | 41.7 |
| | copper pyrithione | 2.0 | 2.0 | 2.0 | 2.0 | 1.9 |
| | SeaNine | | | | | |
| | medetomidine | 0.1 | 0.1 | | | |
| | Econia | | | 2.0 | 2.0 | |
| other additives | talc | 7.0 | 7.0 | 7.0 | 7.0 | 6.8 |
| | zinc oxide | 6.0 | 6.0 | 6.0 | 6.0 | 5.8 |
| | red oxide | 3.0 | 3.0 | 3.0 | 3.0 | 2.9 |
| | titanium oxide | 1.0 | 1.0 | 1.0 | 1.0 | 1.0 |
| | tetraethoxysilane | 1.0 | 1.0 | 1.0 | 1.0 | 1.0 |
| | fatty acid amide thixotropic agent | 1.0 | 1.0 | 1.0 | 1.0 | 1.0 |

(continued)

| component | | Example | | | | |
|---|---|---|---|---|---|---|
| | | 15 | 16 | 17 | 18 | 19 |
| solvent | xylene | 5.9 | 5.9 | 6.0 | 6.0 | 5.8 |
| sum | | 100.0 | 100.0 | 100.0 | 100.0 | 100.0 |
| antifouling test | 12 months | ◎ | ◎ | ◎ | ◎ | ◎ |
| | 18 months | ◎ | ◎ | ◎ | ◎ | ○ |
| | 24 months | ○ | ○ | ◎ | ◎ | △ |

[Table 4]

Table 4

| component | | Comparative Example | | | | | | |
|---|---|---|---|---|---|---|---|---|
| | | 1 | 2 | 3 | 4 | 5 | 6 | 7 |
| copolymer A | copolymer solution 1-1 containing silyl methacrylate | 13.0 | 13.0 | 13.0 | 15.0 | 15.0 | 15.0 | |
| other copolymer | copolymer solution 3-1 | | | | | | | 13.0 |
| carboxylic acid silyl ester B | triisopropylsilyl rosinate solution | | | | 0.5 | | | |
| | triisopropylsilyl hydrogenated rosinate solution | | | | 0.5 | | | |
| | triisopropylsilyl naphthenate solution | | | | | 1.0 | | |
| | triisopropylsilyl tri methylisobutenylcyclohexene carboxylate solution | | | | | | 1.0 | |
| monocarboxylic acid metal salt C | rosin zinc salt solution | 7.0 | | | | | | 7.0 |
| | hydrogenated rosin zinc salt solution | 7.0 | | | | | | 7.0 |
| | naphthenic acid zinc salt solution | | 14.0 | | | | | |
| | tri methyl isobutenylcyclohexene carboxylic acid zinc salt solution | | | 14.0 | | | | |
| plasticizer | chlorinated paraffin | 2.0 | 2.0 | 2.0 | 2.3 | 2.3 | 2.3 | 2.0 |
| | E-2000H | 1.0 | 1.0 | 1.0 | 1.2 | 1.2 | 1.2 | 1.0 |
| antifouling agent | cuprous oxide | 43.0 | 43.0 | 43.0 | 49.2 | 49.2 | 49.2 | 43.0 |
| | copper pyrithione | 2.0 | 2.0 | 2.0 | 2.3 | 2.3 | 2.3 | 2.0 |
| other additives | talc | 7.0 | 7.0 | 7.0 | 8.1 | 8.1 | 8.1 | 7.0 |
| | zinc oxide | 6.0 | 6.0 | 6.0 | 6.9 | 6.9 | 6.9 | 6.0 |
| | red oxide | 3.0 | 3.0 | 3.0 | 3.5 | 3.5 | 3.5 | 3.0 |
| | titanium oxide | 1.0 | 1.0 | 1.0 | 1.2 | 1.2 | 1.2 | 1.0 |
| | tetraethoxysilane | 1.0 | 1.0 | 1.0 | 1.2 | 1.2 | 1.2 | 1.0 |
| | fatty acid amide thixotropic agent | 1.0 | 1.0 | 1.0 | 1.2 | 1.2 | 1.2 | 1.0 |
| solvent | xylene | 6.0 | 6.0 | 6.0 | 6.9 | 6.9 | 6.9 | 6.0 |
| sum | | 100.0 | 100.0 | 100.0 | 100.0 | 100.0 | 100.0 | 100.0 |

(continued)

| component | | Comparative Example | | | | | | |
|---|---|---|---|---|---|---|---|---|
| | | 1 | 2 | 3 | 4 | 5 | 6 | 7 |
| antifouling test | 12 months | ◎ | ◎ | ◎ | ◎ | ◎ | ◎ | △ |
| | 18 months | △ | △ | △ | △ | △ | △ | × |
| | 24 months | × | × | × | × | × | × | × |

Detalis of antifouling agent, pigments and other additives in Table 2 to 4 are as follows.

<Plasticizer>

chlorinated parafifin: product name "Paraffin Chlorinated" (Cl: 40%) (available from Wako Pure Chemical Industrics. Ltd.)

E-2000H: epoxidized soybean oil: product name "Sansozizer E-2000H" (available from New Japan Chemical Co., Ltd.)

<Antifouling agent>

cuprous oxide: product name "NC-301" (available from NISSIN CHEMCO LTD.)
copper pyrithione: product name "copper Omadine" (available from Arch Chemical, Inc.)
Sea Nine: product name "Sea Nine 211", 4,5-dichloro-2-n-octyl-3-isothiazoline (30% solids xylene solution, available from Rohm & Haas, Inc.)
medetomidine: product name "4-(1-(2,3-Dimethylphenyl) ethyl)-1H-imidazole" (available from Wako Pure Chemical Industries, Ltd.)
Econia: product name "Econea 028" 2-(p-chlorophenyl)3-cyano-4-bromo-5-trifluoromethyl pyrrole, (available from JANSSEN PMP)

<Other additives>

talc: product name "CROWN TALC 3S" (available from matsumura sangyo Co., Ltd.)
zinc oxide: product name "zinc oxide II" (available from Seido Chemical Industry Co., Ltd.)
red oxide: product name "TODA COLOR EP-13D" (available from Toda Pigment Corp.)
titanium oxide: product name "FR-41" (available from FURUKAWA CO., LTD.)
tetraethoxysilane: product name "Tetraethyl Orthosilicate" (available from TOKYO CHEMICAL INDUSTRY CO., LTD.)
aliphatic amide thixotropic agent: product name "Disparlon A603-20X" (available from Kusumoto Chemicals, Ltd.)

<Test Example 1 (antifouling test)>

Each of the antifouling coating compositions obtained in Examples 1 to 19 and Comparative Examples 1 to 7 was applied to both sides of a hard vinyl chloride board (100×400×2 mm) and dried to prepare a test plate so that the thickness of the coating film after drying was about 200 μm. This test plate was placed in Owase City, Mie Prefecture for 12 months so that the upper half was in the atmosphere and the lower half was immersed in seawater. Then, the entire test plate was immersed in 1.5 m below the sea level. Fouling on the test plate due to adhesion was observed for a total of 24 months.

The results are shown in Tables 2 to 4.

Numerals in the tables represent the area (%) to which fouling organisms adhere.

From Tables 2 to 4, it was found that compared to the coating film formed using the coating composition of Comparative Examples 1 to 7, the coating film formed using the coating composition of the present invention (Examples 1 to 19) had almost no adhesion of aquatic fouling organisms. This is because the coating film formed using the coating composition of the present invention (Examples 1 to 19) has a moderately controlled hydrolysis rate even after being exposed to sunlight for a long time, and dissolves stably at a constant rate for a long time.

## Claims

**1.** An antifouling coating composition, comprising:

a copolymer A;
a carboxylic acid silyl ester B, being a silyl ester of a carboxylic acid other than an ethylenically unsaturated carboxylic acid and having triisopropylsilyl as a silyl group;
a monocarboxylic acid metal salt C; wherein:

the copolymer A is obtained by copolymerizing a mixture of a monomer (a), a monomer (b) and an ethylenically unsaturated monomer (c);
the monomer (a) is represented by general formula (1);

[chemical formula 1]

$$X-Si(R)_3 \quad (1)$$

in the general formula (1), three Rs are the same or different, and each of the Rs is a C3 to C8 hydrocarbon group branched at α-position or β-position, and the hydrocarbon group is an aliphatic or aromatic group and has a linear, branched, or cyclic structure, and X represents an acryloyloxy group, a methacryloyloxy group, a maleinoyloxy group, a fumaroyloxy group or an itaconoyloxy group;
the monomer (b) is represented by general formula (2);

Y-R (2)

in the general formula (2), R represents a C2 to C10 alkyl group having an oxygen atom or a C2 to C10 aryl group having an oxygen atom, and Y represents an acryloyloxy group, a methacryloyloxy group, a maleinoyloxy group, a fumaroyloxy group or an itaconoyloxy group.

## Patentansprüche

1. Bewuchshemmende Beschichtungszusammensetzung, umfassend:

ein Copolymer A;
einen Carbonsäure-Silylester B, bei dem es sich um einen Silylester einer Carbonsäure, die keine ethylenisch ungesättigte Carbonsäure ist, handelt und der als Silylgruppe Triisopropylsilyl aufweist;
ein Monocarbonsäure-Metallsalz C; wobei
das Copolymer A durch Copolymerisieren eines Gemischs aus einem Monomer (a), einem Monomer (b) und einem ethylenisch ungesättigten Monomer (c) erhalten ist;
das Monomer (a) durch die allgemeine Formel (1) dargestellt wird;

[chemische Formel 1]

R
X—Si—R
R
(1)

in der allgemeinen Formel (1) die drei R gleich oder verschieden sind und jedes der R eine an α-Position oder β-Position verzweigte C3- bis C8-Kohlenwasserstoffgruppe ist und die Kohlenwasserstoffgruppe eine aliphatische oder aromatische Gruppe ist und eine lineare, verzweigte oder ringförmige Struktur aufweist und X eine Acryloyloxygruppe, eine Methacryloyloxygruppe, eine Maleinoyloxygruppe, eine Fumaroyloxygruppe oder eine

Itaconoyloxygruppe darstellt;
das Monomer (b) durch die allgemeine Formel (2) dargestellt wird;

$$\text{Y-R} \qquad (2)$$

in der allgemeinen Formel (2) R eine C2- bis C10-Alkylgruppe mit einem Sauerstoffatom oder eine C2- bis C10-Arylgruppe mit einem Sauerstoffatom darstellt und Y eine Acryloyloxygruppe, eine Methacryloyloxygruppe, eine Maleinoyloxygruppe, eine Fumaroyloxygruppe oder eine Itaconoyloxygruppe darstellt.

## Revendications

**1.** Composition de revêtement antisalissure, comprenant :

un copolymère A ;
un ester silylique d'acide carboxylique B, qui est un ester silylique d'un acide carboxylique autre qu'un acide carboxylique éthyléniquement insaturé et ayant un triisopropylsilyle en tant que groupe silyle ;
un sel métallique d'acide monocarboxylique C ; dans laquelle
le copolymère A est obtenu en copolymérisant un mélange d'un monomère (a), d'un monomère (b) et d'un monomère éthyléniquement insaturé (c) ;
le monomère (a) est représenté par la formule générale (1) ;

[formule chimique 1]

R
X—Si—R
R
(1)

dans la formule générale (1), les trois R sont identiques ou différents, et chacun des R est un groupe hydrocarboné en C3 à C8 ramifié en position $\alpha$ ou en position $\beta$, et le groupe hydrocarboné est un groupe aliphatique ou aromatique et a une structure linéaire, ramifiée ou cyclique, et X représente un groupe acryloyloxy, un groupe méthacryloyloxy, un groupe maléinoyloxy, un groupe fumaroyloxy ou un groupe itaconoyloxy ;
le monomère (b) est représenté par la formule générale (2) ;

$$\text{Y-R} \qquad (2)$$

dans la formule générale (2), R représente un groupe alkyle en C2 à C10 ayant un atome d'oxygène ou un groupe aryle en C2 à C10 ayant un atome d'oxygène, et Y représente un groupe acryloyloxy, un groupe méthacryloyloxy, un groupe maléinoyloxy, un groupe fumaroyloxy ou un groupe itaconoyloxy.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2000017203 A
- EP 2990450 A1
- US 2010249298 A1
- EP 1308484 A1
- EP 2975095 A1
- US 2018094092 A1
- EP 2161316 A1